# EUROPÄISCHE PATENTSCHRIFT

(11) **EP 1 144 173 B1**
(45) Veröffentlichungstag und Bekanntmachung des Hinweises auf die Patenterteilung: **18.09.2002**
(21) Anmeldenummer: 99940044.3
(22) Anmeldetag: 24.07.1999
(51) Int. Cl.: B29C 33/16, B60N 2/44, B68G 7/05, D06N 3/00

(54) **VERFAHREN ZUM HERSTELLEN EINES SCHAUMKÖRPERTEILES, INSBESONDERE EINES POLSTERSCHAUMTEILES FÜR EINEN FLUG- ODER FAHRGASTSITZ**
METHOD FOR PRODUCING A FOAM ELEMENT, ESPECIALLY A FOAM PADDING ELEMENT FOR A PLANE OR VEHICLE SEAT
PROCEDE DE FABRICATION D'UN CORPS EN MOUSSE, EN PARTICULIER D'UNE PARTIE DE REMBOURRAGE EN MOUSSE POUR UN SIEGE D'AVION OU DE VEHICULE

(30) Priorität: 11.01.1999 DE 19900623
(43) Veröffentlichungstag der Anmeldung: 17.10.2001
(73) Patentinhaber: Gottlieb Binder GmbH & Co., 71088 Holzgerlingen (DE)
(72) Erfinder: POULAKIS, Konstantinos, D-01896 Pulsnitz (DE)
(74) Vertreter: Patentanwälte Bartels und Partner
(86) Internationale Anmeldenummer: EP9905303
(87) Internationale Veröffentlichungsnummer: WO00041865

(56) Entgegenhaltungen:
- EP-A- 0 250 175
- WO-A-96/25064
- US-A- 5 534 097

## Beschreibung

Die Erfindung bezieht sich auf ein Verfahren zum Herstellen eines Schaumkörperteiles, insbesondere eines Polsterschaumteiles für einen Flug- oder Fahrgastsitz, bei dem an zumindest einen formgebenden Wandteil einer Einschäumform eine Lage aus einem beim Schäumvorgang eine Sperrschicht zwischen dem Schaummaterial und dem betreffenden Wandteil bildenden Material angelegt wird.

Verfahren dieser Art sind bekannt. Die Ausbildung einer Sperrschicht, die eine unmittelbare Berührung des Schaummaterials mit der formgebenden Wand der Einschäumform verhindert, zielt auf die Erleichterung des Entformvorganges ab, indem ein Anbacken an der formgebenden Wand im Bereich der Sperrschicht verhindert wird. Es ergeben sich jedoch Probleme beim Einlegen der die Sperrschicht bildenden Lage und deren Sicherung an der formgebenden Wand. Aufgrund der beim Schäumvorgang auf die formgebenden Wandteile einwirkenden Kräfte besteht die Gefahr eines Verschiebens der in die Form eingelegten Lage und/oder der Faltenbildung, wodurch sich unter anderem Oberflächenfehler am hergestellten Schaumkörperteil ergeben. Dokument WO-9625064 beschreibt ein Verfahren zur Formung eines Klettverschlusses. Der Klettverschluss besteht aus einer Grundschicht und aus Befestigungskomponenten. Entweder die Grundschicht oder die Befestigungskomponenten enthalten ferromagnetisches Material.

Der Erfindung liegt die Aufgabe zugrunde, ein Verfahren der betrachteten Art aufzuzeigen, das sich durch einfache Durchführbarkeit auszeichnet und darüber hinaus zu verbesserten Eigenschaften des Verfahrenserzeugnisses führt.

Bei einem Verfahren der eingangs genannten Art ist diese Aufgabe erfindungsgemäß dadurch gelöst, daß als die Sperrschicht bildende Lage ein Vlies mit ferromagnetischer Beschichtung verwendet wird und daß das Vlies mittels einer mit der ferromagnetischen Beschichtung zusammenwirkenden, magnetfelderzeugenden Einrichtung am Wandteil lösbar in Stellung gehalten wird.

Aufgrund der erfindungsgemäß vorgesehenen Verwendung eines ferromagnetisch beschichteten Vlieses ergeben sich mehrere wesentliche Vorteile. So gestaltet sich das Einlegen in die Einschäumform besonders einfach. Das Vlies braucht lediglich an die Wand der Einschäumform angelegt zu werden, an der es durch die Zusammenwirkung der ferromagnetischen Beschichtung mit dem am betreffenden Wandteil herrschenden Magnetfeldsicher in Anlage gehalten wird. Vorzugsweise sind zur Erzeugung des Magnetfeldes Permanentmagnete in geeigneter Lageanordnung an der Einschäumform vorgesehen. Das Vlies schmiegt sich mit seiner ferromagnetischen Beschichtung faltenlos an die formgebende Wand an, wobei es sich gegebenenfalls einem konturierten Verlauf des betreffenden Wandteiles anpaßt. Durch die magnetischen Haltekräfte bleibt die Lage des Vlieses beim Einschäumvorgang erhalten.

Während die am Wandteil der Einschäumform anliegende ferromagnetische Beschichtung des Vlieses eine gute Schaumbarriere, d.h. eine sehr wirksame Sperrschicht gegen den Durchtritt von Schaummaterial zum Wandteil bildet, ermöglicht die von der Beschichtung freie Rückseite des Vlieses eine gute Bindung mit dem beim Schäumvorgang hergestellten Schaumkörperteil durch Eindringen des Schaummaterials in die Struktur des Vlieses. Dieses wird daher an dem betreffenden Oberflächenbereich des Schaumkörperteiles durch Anschäumen sicher befestigt. In dieser Hinsicht eignet sich das erfindungsgemäße Verfahren in besonderer Weise für die Herstellung von Polsterschaumteilen für Sitze, bei denen an der Rück- oder Innenseite des betreffenden Polsterschaumteiles mechanische Einrichtungen ein- oder angebaut sind, beispielsweise Getriebeeinrichtungen zur Sitz- oder Rückenlehnenverstellung und/oder zur Verstellung von Kopfstützen an Rückenlehnen. Das an betreffenden Oberflächenbereichen des Polsterschaumteiles befestigte Vlies bildet mit seiner ferromagnetischen Beschichtung eine abriebfeste Schutzschicht gegen Durchscheuern des Schaumteiles durch betreffende mechanische Teile.

Als ferromagnetische Beschichtung wird vorzugsweise eine Zusammensetzung verwendet, die 80 Teile Polyurethan und 20 Teile Ferritpulver enthält und mit einem Bindemittel zu einer streichfähigen Masse verarbeitet ist. Diese wird vorzugsweise mittels Messer oder Beschichtungsdüse auf eine Bahn eines betreffenden Träges aufgerakelt, der relativ zur Rakel bewegt wird.

Hierbei kann das zu beschichtende Vlies selbst als Träger verwendet werden, auf den die streichfähige Masse unmittelbar aufgerakelt wird.

Alternativ kann eine Bahn eines silikonisierten Trägers (z.B. Papier oder Folie) relativ zur Rakel bewegt und mit der Beschichtung versehen werden. In diesem Falle wird der beschichtete Träger zusammen mit einer Bahn des Vlieses anschließend durch ein Kaschierwerk hindurchgeführt und die Beschichtung des Trägers durch Aufkaschieren auf das Vlies übertragen. Nach dem Trennen der Bahnen des Trägers und des die Beschichtung aufweisenden Vlieses kann der Träger aufgerollt werden, um für einen neuerlichen Beschichtungsvorgang wieder verwendet zu werden.

Gegenstand der Erfindung ist auch ein nach dem aufgezeigten Verfahren hergestelltes Schaumkörperteil, das die Merkmale des Anspruches 11 aufweist.

Nachstehend ist die Erfindung anhand der Zeichnung im einzelnen erläutert. Es zeigen:
- Fig. 1: eine perspektivische Ansicht eines Polsterschaumteiles, das den vorderen Schalenteil der Rückenlehne eines Fahrzeugsitzes bildet;
- Fig. 2: eine gegenüber Fig. 1 in etwas größerem Maßstab gezeichnete Rückansicht des Polsterschaumteiles von Fig. 1;
- Fig. 3: eine stark schematisch vereinfacht gezeichnete Darstellung einer Einrichtung zum Herstellen eines beschichteten Vlieses zur Verwendung bei der Durchführung des erfindungsgemäßen Verfahrens und
- Fig. 4: eine der Fig. 3 ähnliche Darstellung einer abgewandelten Einrichtung zum Herstellen des beschichteten Vlieses.

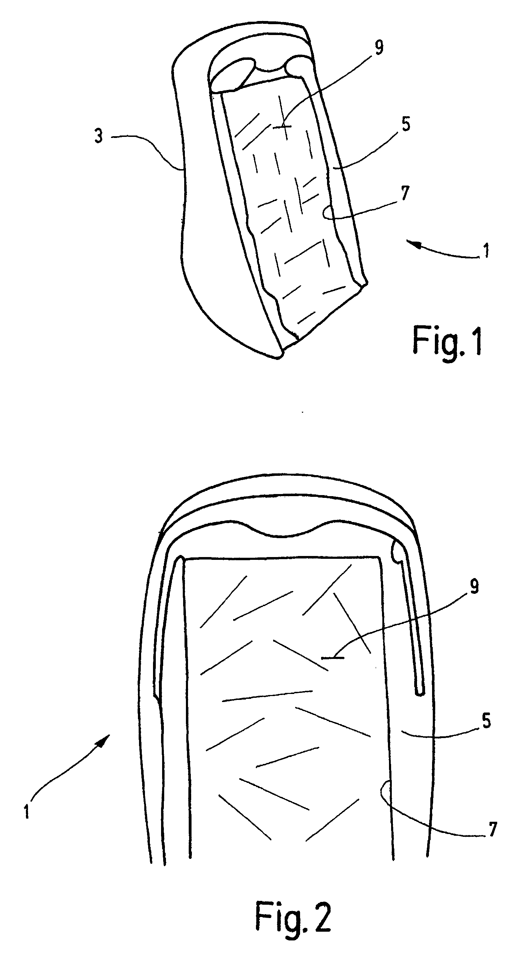

Fig. 1 zeigt ein Schaumkörperteil 1 in Form eines Polsterschaumteiles für einen Fahrgastsitz, wobei es sich um den vorderen Teil einer Rückenlehnenschale handelt, die an ihrer Vorderseite 3 die für die Abstützung des Rückens des Sitzbenutzers ergonomisch geeignete Formgebung besitzt. An seiner Rückseite 5 bildet das Schaumkörperteil 1 eine Vertiefung in Form einer flachen Mulde, die für die Aufnahme der der Rückenlehne zugehörigen Mechanik bestimmt ist, d.h. des tragenden Metallrahmens sowie der Betätigungs- und Verstelleinrichtungen, beispielsweise für die Höheneinstellung einer Kopfstütze, deren Tragstangen sich durch den oberen Teil des Schaumkörperteiles 1 hindurch nach oben erstrecken. Diese hier als "Mechanik" bezeichneten Komponenten sind in der Zeichnung nicht dargestellt.

Wie besonders deutlich aus Fig. 2 zu ersehen ist, ist der Grund der muldenartigen Vertiefung an der Rückseite 5 durch ein Vlies 7 bedeckt, das beim Schäumvorgang an der betreffenden Oberfläche des Schaumkörperteiles 1 angeschäumt ist. Die freiliegende Außenseite des Vlieses 7 weist eine ferromagnetische Beschichtung 9 auf. Die Beschichtung 9, die beim vorliegenden Beispiel eine Schicht aus einem Polyurethan ist, dem Ferritteilchen zugesetzt sind, bildet an der freiliegenden Außenseite des Vlieses 7 eine glatte, dichte und abriebfeste Schicht. Dadurch wirkt die Beschichtung 9 beim Schäumvorgang, wo die Beschichtung 9 an der formgebenden Wand der Einschäumform anliegt, als Schaumbarriere, so daß die Schaummasse zwar mit der freien Rückseite des Vlieses 7 eine gute Bindung eingehen kann, der direkte Kontakt mit der formgebenden Wand durch die Beschichtung 9 jedoch verhindert wird. Somit wird das Anbacken der Schaummasse an der formgebenden Wand vermieden und das Entformen des Schaumkörperteiles erleichtert.

Aufgrund der ferromagnetischen Eigenschaft der Beschichtung 9 ist das Vlies 7 nach Einlegen in die Einschäumform, an der formgebenden Wand derselben anliegend, mittels einer geeigneten Magnetanordnung sicherbar. Ein Verschieben, Falten oder Verwerfen durch die beim Schäumvorgang einwirkenden Kräfte ist daher vermieden, ohne daß spezielle Haltemittel an der formgebenden Wand der Einschäumform vorgesehen sein müßten. Als Magnetanordnung können Permanentmagnetleisten vorgesehen sein, die längs der Ränder des Vlieses 7 an der Außenseite der Einschäumform angeordnet sind.

Das Vlies 7, das am Schaumkörperteil 1, wie in Fig. 1 und 2 gezeigt, so angeschäumt ist, daß die Beschichtung 9 der in der Rückenlehne des betreffenden Fahrgastsitzes untergebrachten Mechanik zugewandt ist, bildet mit seiner Beschichtung 9 eine glatte, reibungsarme und abriebfeste Schicht und daher einen Schutz gegen Durchscheuern der Oberfläche des Schaumkörperteiles 1 durch Teile der Mechanik aufgrund von Vibrationen oder von funktionsbedingten Bewegungen entsprechender Mechanikteile.

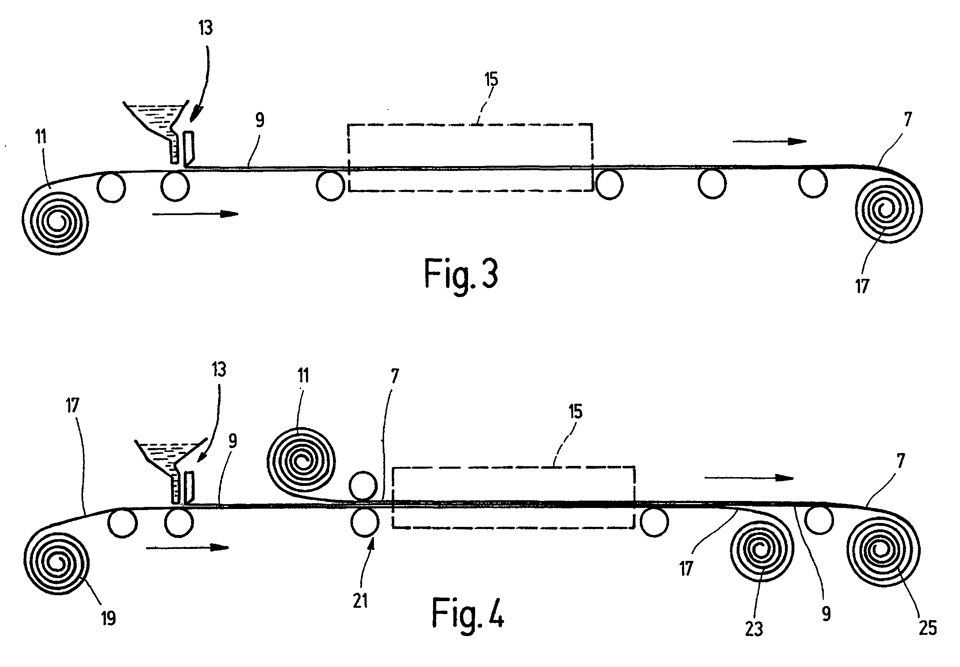

Fig. 3 und 4 verdeutlichen zwei unterschiedliche Vorgehensweisen für die Herstellung des Vlieses 7 mit ferromagnetischer Beschichtung 9. Beim Beispiel beider Fälle wird als Grundmaterial ein unbeschichtetes PET-Vlies 11 mit 20 bis 60 g/m²,vorzugsweise etwa 40 g/m² verwendet, auf das 60 bis 100 g/m², vorzugsweise etwa 80g/m², der ferromagnetischen Beschichtung 9 aufgetragen wird. Diese Beschichtung wird als streichfähige Masse durch Aufrakeln aufgetragen. Diese Masse kann beispielsweise ein Gemisch aus 80 Teilen Polyurethan SU 4715 (Firma Stahl) oder einem ähnlichen Polyurethanmaterial mit Zusatz von 20 Teilen Ferritpulver der Korngröße 10 Mikron sein, wobei Butamon als verdünnendes Mittel verwendet wird, um das Gemisch zu einer streichfähigen Masse von ca. 3000 mPa · s zu verarbeiten.

Bei dem in Fig. 3 gezeigten Beispiel wird die die Beschichtung 9 bildende streichfähige Masse unmittelbar auf eine Bahn des von einem Vorratswickel abgewickelten, unbeschichteten Vlieses 11 aufgetragen, indem die Bahn des unbeschichteten Vlieses 11 durch eine Beschichtungseinrichtung hindurchgeführt wird, beim gezeigten Beispiel durch eine Rakel 13. Die Bahn des Vlieses 7 mit aufgetragener, noch nasser Beschichtung 9 wird sodann durch einen Trockner 15 hindurchgeführt und nach Trocknen der Beschichtung 9 zu einem Wickel 17 aufgerollt.

Fig. 4 verdeutlicht eine abgewandelte Vorgehensweise, bei der die die Beschichtung 9 bildende streichfähige Masse mittels der Rakel nicht unmittelbar auf das unbeschichtete PET-Vlies 11 aufgetragen wird, sondern zunächst auf die Bahn eines silikonisierten Trägers 17, beispielsweise in Form einer Papierbahn oder Folienbahn, die von einem Vorratswickel 19 der Rakel 13 zugeführt wird. Nach Auftragen der Beschichtung 9 auf den Träger 17 wird dieser zusammen mit der Bahn des unbeschichteten PET-Vlieses 11 einem Kaschierwerk 21 zugeführt, wo die Übertragung der Beschichtung 9 vom Träger 17 auf das Vlies 11 durch Aufkaschieren erfolgt. Anschließend durchlaufen die Bahnen des Trägers 17 und des die auf ihn übertragene Beschichtung aufweisenden Vlieses 7 durch den Trockner 15. Nach Durchlauf durch den Trockner 15 wird der Träger 17 vom beschichteten Vlies 7 abgetrennt und gesondert zu einem Wickel 23 aufgerollt. Das beschichtete Vlies 7 wird zum Wickel 25 aufgerollt. Der auf dem Wickel 23 aufgerollte Träger 17 kann wieder verwendet werden, d.h. für weitere Fertigungsvorgänge den Vorratswickel 19 ersetzen, wenn dieser erschöpft ist.

## Patentansprüche

1. Verfahren zum Herstellen eines Schaumkörperteiles (1), insbesondere eines Polsterschaumteiles für einen Flug- oder Fahrgastsitz, bei dem an zumindest einen formgebenden Wandteil einer Einschäumform eine Lage aus einem beim Schäumvorgang eine Sperrschicht zwischen dem Schaummaterial und dem betreffenden Wandteil bildenden Material angelegt wird, **dadurch gekennzeichnet, daß** als die Sperrschicht bildende Lage ein Vlies (7) mit ferromagnetischer Beschichtung (9) verwendet wird und daß das Vlies (7) mittels einer mit der ferromagnetischen Beschichtung (9) zusammenwirkenden, magnetfelderzeugenden Einrichtung am Wandteil lösbar in Stellung gehalten wird.

2. Verfahren nach Anspruch 1, **dadurch gekennzeichnet, daß** ein Vlies (7) auf Polyesterbasis mit 20 bis 60 g/m²verwendet wird.

3. Verfahren nach Anspruch 2, **dadurch gekennzeichnet, daß** ein PET-Vlies (7) mit einer ferromagnetischen Beschichtung (9) von 60 bis 100 g/m²verwendet wird.

4. Verfahren nach Anspruch 2 oder 3, **dadurch gekennzeichnet, daß** als ferromagnetische Beschichtung (9) eine Zusammensetzung verwendet wird, die 80 Teile Polyurethan und 20 Teile Ferritpulver enthält und mit einem Lösungsmittel zur streichfähigen Masse verarbeitet ist.

5. Verfahren nach Anspruch 4, **dadurch gekennzeichnet, daß** Polyurethan (SU-4715, Firma Stahl) und Fe-Partikel von 10 Mikron verwendet werden und daß als Lösungsmittel für die Verarbeitung zur streichfähigen Masse Butanon verwendet wird.

6. Verfahren nach einem der Ansprüche 1 bis 5, **dadurch gekennzeichnet, daß** aus der streichfähigen Masse durch Aufrakeln mittels Messer oder Düse eine Schicht auf einer relativ zur Rakel (13) bewegten Bahn eines Trägers (17) gebildet wird.

7. Verfahren nach Anspruch 6, **dadurch gekennzeichnet, daß** das zu beschichtende Vlies (11) selbst als Träger verwendet wird, auf den die streichfähige Masse unmittelbar aufgerakelt wird.

8. Verfahren nach Anspruch 6, **dadurch gekennzeichnet, daß** eine Bahn des silikonisierten Trägers (17) relativ zur Rakel (13) bewegt und mit der Beschichtung (9) versehen wird, und daß der beschichtete Träger (17) zusammen mit einer Bahn des Vlieses (11) durch ein Kaschierwerk (21) hindurchgeführt und die Beschichtung (9) vom Träger (17) auf das Vlies (11) aufkaschiert wird.

9. Verfahren nach Anspruch 7 oder 8, **dadurch gekennzeichnet, daß** die Bahn des beschichteten Vlieses (7) durch einen Trockner (15) hindurchgeführt wird.

10. Verfahren nach den Ansprüchen 8 und 9, **dadurch gekennzeichnet, daß** die Bahnen des Trägers (17) und des die ferromagnetische Beschichtung (9) aufweisenden Vlieses (7) nach Durchlauf durch den Trockner (15) voneinander getrennt werden.

11. Nach dem Verfahren nach einem der Ansprüche 1 bis 10 hergestelltes Schaumkörperteil (1), das an zumindest einem Teil seiner Oberfläche eine Lage aus einem Vlies (7) mit ferromagnetischer Beschichtung (9) aufweist.

## Claims

1. Method for producing a foam element (1), in particular a padded foam element for an airline or vehicle passenger seat, wherein a layer of a material which forms a barrier layer during the foaming procedure between the foam material and. the relevant wall element is applied to at least one shaping wall element of a forming mould, **characterised in that** a fleece (7) having a ferromagnetic coating (9) is used as the layer which forms the barrier layer, and **in that** the fleece (7) is held releasably in position on the wall element by means of a device which produces a magnetic field and which co-operates with the ferromagnetic coating (9).

2. Method according to claim 1, **characterised in that** a fleece (7) on a polyester base having from 20 to 60 g/m² is used.

3. Method according to claim 2, **characterised in that** a PET fleece (7) having a ferromagnetic coating (9) of from 60 to 100 g/m² is used.

4. Method according to claim 2 or 3, **characterised in that** a compound is used as the ferromagnetic coating (9), which compound contains 80 parts polyurethane and 20 parts ferrite powder and which is processed with a solvent to form an applicable substance.

5. Method according to claim 4, **characterised in that** polyurethane (SU-4715, Messrs. Stahl) and Fe particles measuring 10 microns are used, and **in that** 1-butanone is used as the solvent for the processing to form the applicable substance.

6. Method according to any one of claims 1 to 5, **characterised in that** a layer of the applicable substance is formed on a web of a carrier (17), which web is moved relative to the doctor blade (13), by application by doctor blade or nozzle.

7. Method according to claim 6, **characterised in that** the fleece (11) to be coated is itself used as the carrier, onto which the applicable substance is applied directly by doctor.

8. Method according to claim 6, **characterised in that** a web of the siliconised carrier (17) is moved relative to the doctor blade (13) and is provided with the coating (9), and **in that** the coated carrier (17) is guided through a laminating mechanism (21) together with a web of the fleece (11) the coating (9) of the carrier (17) is laminated onto the fleece (11).

9. Method according to claim 7 or 8, **characterised in that** the web of the coated fleece (7) is guided through a drier (15).

10. Method according to claims 8 and 9, **characterised in that** the web of the carrier (17) and of the fleece (7) which has the ferromagnetic coating (9) are separated from each other once they have passed through the drier (15).

11. Foam element (1) which is produced according to the method according to any one of claims 1 to 10 and which has a layer of a fleece (7) having a ferromagnetic coating (9) on at least a portion of the surface thereof.

## Revendications

1. Procédé pour la réalisation d'une pièce en mousse (1), en particulier d'une pièce en mousse de rembourrage pour un siège d'avion ou de voiture, dans le cas duquel une couche en un matériau formant lors de l'opération d'application de la mousse une couche de barrage entre la mousse et la partie de paroi correspondante est déposée sur au moins une partie de paroi donnant la forme d'un moule d'enrobage de mousse, **caractérisé en ce que** comme couche formant la couche de barrage on utilise un crin (7) avec un revêtement ferromagnétique (9) et **en ce que** le crin (7) est maintenu en position de manière amovible sur la partie de paroi à l'aide d'un dispositif générant un champ magnétique et agissant de concert avec le revêtement ferromagnétique (9).

2. Procédé selon la revendication 1, **caractérisé en ce qu'**un crin (7) base de polyester de 20 à 60 g/m² est utilisé.

3. Procédé selon la revendication 2, **caractérisé en ce qu'**un crin en PET (7) avec un revêtement ferromagnétique (9) de 60 à 100 g/m² est utilisé.

4. Procédé selon la revendication 2 ou 3, **caractérisé en ce que** comme revêtement ferromagnétique (9) une composition, qui contient 80 parties de polyuréthane et 20 parties de poudre de ferrite et qui est traitée avec un solvant pour former une masse pouvant être appliquée au pinceau, est utilisée.

5. Procédé selon la revendication 4, **caractérisé en ce que** du polyuréthane (SU-4715, société Stahl) et des particules de Fe de 10 microns sont utilisés et **en ce que** du Butanon (méthyléthylkétone) est employé comme solvant pour le traitement en une masse pouvant être appliquée au pinceau.

6. Procédé selon l'une des revendications 1 à 5, **caractérisé en ce qu'**à partir de la masse pouvant être appliquée au pinceau une couche est formée par raclage à l'aide d'un couteau ou d'une buse sur une bande d'un support (17), qui est déplacée par rapport au racloir (13).

7. Procédé selon la revendication 6, **caractérisé en ce que** le crin à revêtir (11) est lui-même utilisé comme support, sur lequel la masse pouvant être appliquée au pinceau est directement appliquée par raclage.

8. Procédé selon la revendication 6, **caractérisé en ce qu'**une bande du support traité au silicone (17) est déplacée par rapport au racloir (13) et est munie du revêtement (9) et **en ce que** le support revêtu (17) passe en même temps qu'une bande du crin (11) à travers un dispositif de placage (21), le revêtement (9) du support (17) étant plaqué sur le crin (11).

9. Procédé selon la revendication 7 ou 8, **caractérisé en ce que** la bande de crin revêtu (7) passe à travers un dispositif de séchage (15).

10. Procédé selon les revendications 8 et 9, **caractérisé en ce qu'**après le passage dans le dispositif de séchage (15) les bandes du support (17) et du crin (7) muni du revêtement ferromagnétique (9) sont séparées l'une de l'autre.

11. Pièce en mousse (1) réalisée avec le procédé selon l'une des revendications 1 à 10, qui comprend sur au moins une partie de sa surface une couche de crin (7) munie d'un revêtement ferromagnétique (9).
